(19) **Europäisches Patentamt European Patent Office Office européen des brevets**

(11) **EP 2 213 996 B1**

(12) **FASCICULE DE BREVET EUROPEEN**

(45) Date de publication et mention
de la délivrance du brevet:
**21.09.2011 Bulletin 2011/38**

(51) Int Cl.:
*G01L 3/08* *(2006.01)* *G01L 3/12* *(2006.01)*
*G01D 5/30* *(2006.01)* *G01D 5/28* *(2006.01)*

(21) Numéro de dépôt: **09305100.1**

(22) Date de dépôt: **03.02.2009**

(54) **Dispositif de mesure optique de couple appliqué à un arbre de torsion**

Vorrichtung zum optischen Messen des an eine Torsionswelle angelegten Drehmoments

Device for optical measurement of the torque applied to a torque shaft

(84) Etats contractants désignés:
**DE FR**

(43) Date de publication de la demande:
**04.08.2010 Bulletin 2010/31**

(73) Titulaire: **Delphi Technologies, Inc.
Troy, MI 48007 (US)**

(72) Inventeurs:
• **Geyl, Laurent
67400, ILLKIRCH (FR)**

• **Tupinier, Laurent
67116, REICHSTETT (FR)**

(74) Mandataire: **Robert, Vincent
Delphi France SAS
64, avenue de la Plaine de France
Zac Paris Nord 2
BP 65059
95972 Tremblay-en-France (FR)**

(56) Documents cités:
JP-A- 1 116 423     US-A- 4 641 027
US-A1- 2006 016 970     US-A1- 2007 017 734

# Description

La présente invention a trait à un dispositif de mesure optique de couple appliqué à un arbre rotatif. L'exemple préférentiel utilisé dans la suite de la description est celui des hauts de colonne de direction de véhicules automobile.

Dans cette hypothèse, les capteurs de couples sont par exemple utilisés en combinaison avec la direction assistée, et par conséquent implantés dans le compartiment moteur. Les capteurs existants mesurent le couple appliqué à une barre de torsion en utilisant principalement deux méthodes, respectivement basées sur une mesure de tension et sur une mesure d'angle.

La méthode des tensions utilise des jauges de contraintes piézo-résistives, ou des matériaux magnétostrictifs. Les dispositifs magnétostrictifs, très largement employés de nos jours, nécessitent l'utilisation d'un matériau magnétostrictif pour la barre de torsion, et requièrent l'emploi de deux enroulements électriques. Le traitement des signaux est, dans cette hypothèse, complexe.

La méthode angulaire est basée sur l'existence de deux codeurs optiques permettant la mesure de deux angles distincts correspondant à des emplacements différents sur la barre de torsion. L'écart angulaire obtenu est directement proportionnel au couple qui est appliqué à la barre, et dépend d'une part de la géométrie de ladite barre, et d'autre part des propriétés mécaniques du matériau qui la constitue.

Un autre dispositif, voir par exemple le document JP01116423, utilise une source de lumière placée sur un support solidarisé en un premier emplacement de l'arbre et qui émet deux faisceaux incidents de part et d'autre de la source de manière oblique et en direction de deux surfaces réfléchissantes solidaires de l'arbre en des emplacements axialement distants. Les faisceaux sont ensuite réfléchis vers des détecteurs fixés hors de l'arbre. Le traitement des signaux mesurés par les deux détecteurs permet d'en déduire un couple appliqué à l'arbre.

L'évolution filo-commandée des organes de direction (steer-by-wire) des véhicules, qui constitue le futur technologique immédiat de ces derniers, nécessitera l'implantation de dispositifs de mesure angulaire et de couple dans une zone aussi proche que possible du volant. La suppression de la quasi totalité de la colonne de direction implique par ailleurs une réduction de l'encombrement desdits dispositifs de mesure du fait de leur confinement au voisinage du volant. Enfin, la suppression des liaisons mécaniques impose une fiabilité sans faille du système aussi bien que du traitement en aval des informations obtenues par les capteurs.

La présente invention souscrit à ces objectifs, et propose un système dont le nombre de composants est réduit, qui est mécaniquement simple à implanter et conduit à une gestion des signaux/informations dépourvue de complexité.

Pour remplir ces objectifs, et d'autres qui seront apparents à la lecture de ce texte, le dispositif de mesure optique de couple de l'invention se caractérise à titre principal en ce qu'il comporte une source de lumière placée sur un support solidarisé en un premier emplacement d'un arbre de torsion, ladite source émettant un faisceau lumineux d'allure radiale vers l'extérieur en direction d'un dispositif réfléchissant solidarisé à une pièce fixée audit arbre en un second emplacement axialement distant du premier, le rayon étant réfléchi vers un dispositif de détection fixé au support.

Contrairement aux solutions de l'art antérieur, nécessitant dans tous les cas deux mesures, faites par deux groupes de composants et donnant lieu à des traitements d'abord différenciés sur la base desquels s'effectue ensuite le calcul du couple, la solution présentée ne comporte qu'un unique module matériel, c'est à dire un unique capteur impliquant un traitement de données considérablement simplifié. L'accroissement de la fiabilité est double, et résulte en cascade de la réduction matérielle de composants et de la simplification du traitement des données qui en résulte.

La solution de l'invention est par ailleurs — du fait de la technologie optique employée — insensible aux champs électromagnétiques, et elle n'est pas susceptible d'être perturbée par des variations limitées de puissance du faisceau lumineux, toujours possibles du fait de la variabilité de l'alimentation en énergie. Il s'agit par ailleurs d'une solution simple à implanter, permettant des mesures offrant une précision élevée pour un coût très raisonnable, d'où un impact économique très favorable par rapport à ses devanciers.

Le principe général est le suivant : en l'absence de torsion, le faisceau lumineux est envoyé vers une position prédéterminée connue du dispositif de détection. Le faisceau incident est par exemple envoyé de telle sorte qu'il soit centré sur le dispositif réfléchissant, et par conséquent renvoyé vers un secteur prédéterminé du dispositif de détection fonction des caractéristiques optiques de réflexion connues du dispositif réfléchissant. Le système de traitement, lorsqu'il détecte l'arrivée du faisceau réfléchi sur cette position prédéterminée, en infère qu'il n'y a pas de torsion. Lorsqu'un couple est appliqué à la barre de torsion, l'un du support de la source de lumière ou de la pièce sur laquelle est fixé le dispositif réfléchissant subit une rotation relativement à l'autre du fait de la torsion.

En réalité, le déplacement angulaire étant très petit, il peut concrètement être assimilé à un déplacement en translation, ce qui simplifie encore le calcul. La position du rayon lumineux incident par rapport au dispositif réfléchissant change du fait de ce déplacement relatif. Le rayon réfléchi modifie dès lors sa trajectoire et rencontre le dispositif de détection en un point différent de celui qui reflète l'absence de torsion. Le couple appliqué à la barre de torsion peut dès lors être déduit sans traitement particulièrement complexe, par l'unité de traitement électronique, du déplacement du point d'impact du rayon réfléchi sur le dispositif de détection.

Plus précisément, selon une possibilité, le support peut consister en une carte à circuit imprimé orientée parallèlement à l'arbre, dont l'une des extrémités est fixée à une pièce de couplage mécanique audit arbre. Dans ce cas, le dispositif de détection est de préférence également implanté sur le circuit imprimé. Selon une possibilité, le circuit imprimé peut d'ailleurs être flexible et le détecteur de position constitué d'une puce souple, cette association permettant une intégration du dispositif de détection au plus proche de la barre de torsion, et une précision de mesure accrue.

Compte tenu de la nature du dispositif de mesure de couple de l'invention, basé sur la mesure du déplacement d'un unique faisceau lumineux, le dispositif de détection peut par exemple simplement consister en une rangée, ou éventuellement un réseau, de photodiodes. Dans cette hypothèse, le couple effectivement appliqué à la barre de torsion se déduit de la position de la ou des photodiodes recevant le rayon lumineux réfléchi, en référence à la position initiale en l'absence de torsion.

Un capteur de position optique (ou Position Sensitive Device) mesurant les coordonnées du barycentre de la puissance lumineuse reçue sur une ou deux dimensions constitue alternativement une solution rapide et robuste car indépendante de la puissance émettrice de la source. L'information utile est directement transmise par le capteur optique, sans traitement.

En fait, plus précisément, le dispositif réfléchissant peut être fixé à une pièce en L dont la base est solidarisée radialement à l'arbre et dont la portion se développant parallèlement à l'arbre comporte, sur sa face en regard de l'arbre, le dispositif réfléchissant. En l'espèce, la distance séparant l'emplacement du couplage à l'arbre respectivement du support du circuit imprimé et de la base de la pièce en L constitue la longueur axiale le long de laquelle la torsion est mesurée.

Le dispositif réfléchissant peut par exemple être un miroir dont la surface réfléchissante est inclinée par rapport à l'axe de l'arbre de torsion. Plus précisément, il peut s'agir d'un prisme de section triangulaire dont l'hypoténuse est couverte d'une couche réfléchissante. Dans ce cas, le déplacement du faisceau lumineux réfléchi sur le dispositif de détection, par exemple une rangée de photodiodes, reflète le déplacement relatif des deux emplacements de fixation à l'arbre respectivement du support de circuit imprimé et de la pièce en L.

Alternativement, ce dispositif réfléchissant peut être constitué d'un réseau diffractif plan conférant au rayon réfléchi un angle différent selon l'emplacement du point d'impact du rayon incident. Il s'agit alors d'un miroir holographique plan. Compte tenu de la souplesse de ce type de support, il est parfaitement possible de prévoir un réseau diffractant selon une période qui varie et dépend du point d'impact du faisceau incident de sorte que l'angle de réflexion change en fonction de la localisation dudit point. Dans cette hypothèse, une source à cohérence spatiale et temporelle adaptée est nécessaire. Une diode laser, ou une diode superluminescente associée à un filtre temporel, ou une diode électroluminescente à cavité résonnante répondent à ces exigences.

L'invention va à présent être décrite plus en détail, en référence aux figures, pour lesquelles :

- la figure 1 est une représentation schématique en coupe d'un dispositif de mesure optique de coupe selon l'invention ;
- la figure 2 montre un agrandissement de la partie de mesure optique, selon une première variante ; et
- la figure 3 en représente une seconde variante, dans le même plan de coupe A-A ;
- la figure 4 montre un exemple de réseau diffractif utilisé comme dispositif réfléchissant, le détecteur de position étant situé radialement à l'instar des figures 2 et 3 ; et
- la figure 5 représente une alternative de réseau diffractif correspondant à la variante longitudinale figurée en traits pointillés en figure 1.

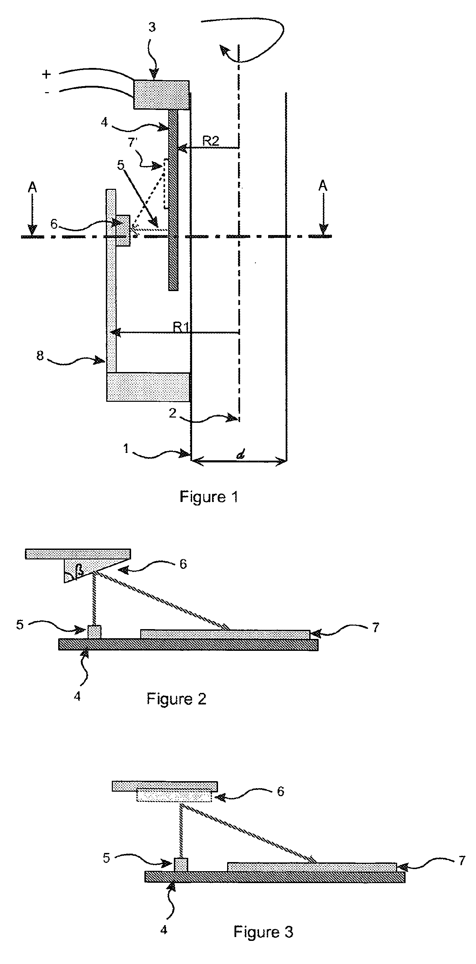

En référence à la figure 1, l'arbre de torsion (1), centré sur l'axe (2), comporte à l'une de ses extrémités des moyens de fixation (3) d'un circuit imprimé (4) orienté parallèlement à l'axe (2) et qui supporte une source de lumière (5) émettant un faisceau lumineux en direction d'un dispositif réfléchissant (6). Ce dernier est solidarisé à une pièce (8) fixée à une autre extrémité de l'arbre de torsion (1). Le circuit imprimé (4) comporte par ailleurs un dispositif de détection (7) disposé radialement (uniquement visible en figures 2 et 3) ou un dispositif (7') disposé longitudinalement représenté en figure 1 en traits pointillés, sur lesquels le faisceau réfléchi par le dispositif (6) s'applique. Les moyens de fixation (3) permettent simultanément un couplage électrique rotatif, de façon à pouvoir alimenter électriquement le circuit imprimé (4), et les composants qui y sont fixés.

En référence aux figures 2 et 3, qui montrent deux variantes de dispositifs réfléchissant (6), la configuration du reste du dispositif de mesure selon l'invention n'est pas affectée par le choix de la variante, et n'est donc pas représenté. Dans le premier cas (voir en figure 2), il s'agit d'un composant optique classique, en l'espèce un prisme (6) dont la face inclinée en regard du circuit imprimé (4) est par exemple recouverte d'une couche réfléchissante, de manière à réfléchir le rayon issu de la diode (5) selon un angle différent de l'angle d'incidence, en direction d'une rangée de cellules de détection constituant le dispositif de détection (7). L'orientation du rayon réfléchi, et par conséquent le point d'impact sur les cellules de détection change en fonction de la rotation imprimée à l'arbre de torsion (1) imprimant un déplacement du dispositif de détection (7) relativement au dispositif réfléchissant (6) du fait de la distance axiale entre leur couplage mécanique à l'arbre de torsion (1). La mesure du changement du point d'impact du rayon réfléchi sur les cellules de détection du dispositif (7) permet, à l'aide de calculs simples, d'aboutir à la connaissance du couple de torsion appliqué à l'arbre (1).

Ainsi, le couple de torsion peut par exemple s'exprimer par la formule classique suivante :

$$T = \frac{J.G.\theta}{L}$$

où J représente le moment d'inertie, G le module de rigidité, et L la distance séparant les emplacements de couplage mécanique des moyens (3) et de la pièce (8). $\vartheta$ est l'angle de torsion.

G peut par ailleurs s'exprimer par la formule suivante :

$$G = \frac{E}{2.(1+v)}$$

où E est le module de Young et v le coefficient de Poisson.

Le déplacement f du rayon réfléchi sur le dispositif de détection (7) s'obtient alors par une relation linéaire, dont la valeur maximale $f_{max}$, pour un couple de torsion maximal $T_{max}$, est calculée ci-dessous dans l'hypothèse où $\beta = \Pi/4$ et en considérant que

$$f = \frac{(R1+R2)}{2}\theta :$$

$$f\max = (R1+R2)T\max.\frac{16.L.(1+v)}{\pi d^2.E}$$

sachant que $J = \frac{\pi}{4}.(\frac{d}{2})^2$, où d est le diamètre de l'arbre (1).

Selon un exemple concret possible avec une barre de torsion en aluminium, en prenant un diamètre de l'arbre (1) de d = 0,01 m, et L = 0,06 m, R1 = 0,015 m et R2 = 0,035 m, pour une valeur de couple maximale de $T_{max}$ = ±10 N.m, on aboutit à un déplacement du rayon réfléchi de l'ordre de 1,18 mm sur le dispositif de détection (7).

L'emploi d'un capteur de position optique de résolution 10 $\mu$m conduirait à une résolution de l'ordre de 0,15 N.m pour la mesure du couple.

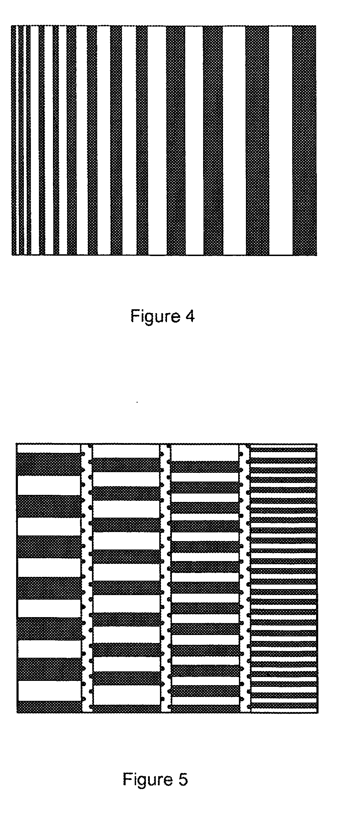

Pour la configuration montrée en figure 3, dans laquelle le dispositif réfléchissant (6) est en l'occurrence constitué d'un composant diffractif plan, la résolution de la mesure peut par exemple être augmentée en modifiant l'angle de réflexion selon la position relative de la diode (5) et du dispositif réfléchissant (6). On peut ainsi amplifier, au niveau du dispositif de détection (7), le déplacement angulaire dû à la torsion exercée sur l'arbre (1). C'est par exemple l'objet du réseau apparaissant en figure 4.

Une possibilité de réseau diffractif utilisé à titre de dispositif réfléchissant (6) selon lequel le dispositif de détection (7') est disposé parallèlement à l'axe (2) de la barre de torsion (1) (voir en traits pointillés en figure 1) est montrée en figure 5.

Le système de traitement de l'invention est grandement simplifié puisqu'il se contente de mesurer la distance séparant les points d'impact du faisceau réfléchi sur le dispositif de détection (7, 7') respectivement en présence et en l'absence de couple de torsion, et de calculer à l'aide d'une simple relation le couple correspondant.

**Revendications**

1. Dispositif de mesure optique de couple appliqué à un arbre de torsion (1), comportant une source de lumière (5) placée sur un support (4) solidarisé en un premier emplacement à l'arbre (1), **caractérisé en ce que** ladite source (5) émettant un faisceau lumineux d'allure radiale vers l'extérieur en direction d'un dispositif réfléchissant (6) solidarisé à une pièce (8) fixée audit arbre (1) en un second emplacement axialement distant du premier, le rayon étant réfléchi vers un dispositif de détection (7) fixé audit support (4).

2. Dispositif de mesure optique de couple selon la revendication précédente, **caractérisé en ce que** le support consiste en une carte à circuit imprimé (4) orientée parallèlement à l'arbre (1), dont l'une des extrémités est fixée à une pièce de couplage (3) mécanique audit arbre (1).

3. Dispositif de mesure optique de couple selon la revendication précédente, **caractérisé en ce que** le dispositif de détection (7) est implanté sur le circuit imprimé (4).

4. Dispositif de mesure optique de couple selon la revendication précédente, **caractérisé en ce que** le dispositif de détection (7) consiste en une rangée ou un réseau de photodiodes.

5. Dispositif de mesure optique de couple selon l'une des revendications précédentes, **caractérisé en ce que** le dispositif de détection est un capteur de position optique mesurant les coordonnées du barycentre de la puissance lumineuse reçue, sur une ou deux dimensions.

6. Dispositif de mesure optique de couple selon l'une des revendications 2 à 5, **caractérisé en ce que** le circuit imprimé (4) est flexible et le détecteur de position (7) constitué d'une puce souple.

7. Dispositif de mesure optique de couple selon l'une des revendications précédentes, **caractérisé en ce que** le dispositif réfléchissant (6) est fixé à une pièce en L (8) dont la base est solidarisée radialement à l'arbre (1) et dont la portion se développant parallèlement à l'arbre comporte, sur sa face en regard de l'arbre, le dispositif réfléchissant (6).

8. Dispositif de mesure optique de couple selon la revendication précédente, **caractérisé en ce que** le dispositif réfléchissant est un miroir (6) dont la surface réfléchissante est inclinée par rapport à l'axe (2) de l'arbre (1).

9. Dispositif de mesure optique de couple selon la revendication précédente, **caractérisé en ce que** le miroir (6) est constitué d'un prisme de section triangulaire dont l'hypoténuse est couverte d'une couche réfléchissante.

10. Dispositif de mesure optique de couple selon la revendication 7, **caractérisé en ce que** le dispositif réfléchissant est constitué d'un réseau diffractif plan (6) conférant au rayon réfléchi un angle différent selon l'emplacement du point d'impact du rayon incident, le faisceau de lumière présentant une cohérence spatiale et temporelle.

11. Dispositif de mesure optique de couple selon la revendication précédente, **caractérisé en ce que** la source de lumière (5) est une diode laser ou une diode superluminescente associée à un filtre temporel, ou une diode électroluminescente à cavité résonnante.

**Claims**

1. Device for optical measurement of torque applied to a torsion shaft (1), including a light source (5) placed on a support (4) attached at a first location to the shaft (1), **characterised in that** the said source (5) emitting a first light beam of radially outward direction towards a reflecting device (6) attached to a piece (8) fixed to the said shaft (1) at a second location axially distant from the first, the said ray being reflected towards a detection device (7) fixed to the said support (4).

2. Device for optical measurement of torque according to the preceding claim, **characterised in that** the support consists of a printed circuit board (4) orientated parallel with the shaft (1), one of the ends of which is fixed to a piece for mechanical connection (3) to the said shaft (1).

3. Device for optical measurement of torque according to the preceding claim, **characterised in that** the detection device (7) is embedded in the printed circuit (4).

4. Device for optical measurement of torque according to the preceding claim, **characterised in that** the detection device (7) consists of a row or an array of photodiodes.

5. Device for optical measurement of torque according to one of the preceding claims, **characterised in that** the detection device is an optical position sensor measuring the co-ordinates of the barycentre of the received luminous power, in one or two dimensions.

6. Device for optical measurement of torque according to one of claims 2 to 5, **characterised in that** the printed circuit (4) is flexible and the position detector (7) formed of a flexible chip.

7. Device for optical measurement of torque according to one of the preceding claims, **characterised in that** the reflecting device (6) is fixed to an L-shaped piece (8) the base of which is radially attached to the shaft (1) and the portion of which extending parallel with the shaft comprises, on its face facing the shaft, the reflecting device (6).

8. Device for optical measurement of torque according to the preceding claim, **characterised in that** the reflecting device is a mirror (6) the reflecting surface of which is inclined relative to the axis (2) of the shaft (1).

9. Device for optical measurement of torque according to the preceding claim, **characterised in that** the mirror (6) is formed of a prism of triangular section the hypotenuse of which is covered with a reflecting layer.

10. Device for optical measurement of torque according to claim 7, **characterised in that** the reflecting device is formed of a plane diffraction grating (6) giving the reflected ray a different angle depending on the location of the point of impact of the incident ray, the light beam presenting a spatial and temporal coherence.

11. Device for optical measurement of torque according to the preceding claim, **characterised in that** the light source (5) is a laser diode or an superluminescent diode associated with a temporal filter, or an electroluminescent diode with a resonant cavity.

**Patentansprüche**

1. Vorrichtung zum optischen Messen eines an eine Torsionswelle (1) angelegten Drehmoments, die eine Lichtquelle (5) auf einem Träger (4) umfasst, der an einem ersten Ort fest mit der Welle (1) verbunden ist, **dadurch gekennzeichnet, dass** die genannte Quelle (5) einen radial verlaufenden Lichtstrahl nach außen in Richtung einer reflektierenden Vorrichtung (6) aussendet, die an einem zweiten Ort axial fern von der ersten mit einem an der genannten Welle (1) befestigten Teil (8) fest verbunden ist, wobei der Strahl zu einer an dem genannten Träger (4) befestigten Detektionsvorrichtung (7) reflektiert wird.

2. Vorrichtung zum optischen Messen eines Drehmoments nach dem vorherigen Anspruch, **dadurch gekennzeichnet, dass** der Träger aus einer IC-Karte (4) besteht, die parallel zu der Welle (1) ausgerichtet ist, von der ein Ende mit einem mechanischen Kopplungsstück (3) an der genannten Welle (1) befestigt ist.

3. Vorrichtung zum optischen Messen eines Drehmoments nach dem vorherigen Anspruch, **dadurch gekennzeichnet, dass** die Detektionsvorrichtung (7) in die gedruckte Schaltung (4) integriert ist.

4. Vorrichtung zum optischen Messen eines Drehmoments nach dem vorherigen Anspruch, **dadurch gekennzeichnet, dass** die Detektionsvorrichtung (7) aus einer Reihe oder einem Gitter von Photodioden besteht.

5. Vorrichtung zum optischen Messen eines Drehmoments nach einem der vorherigen Ansprüche, **dadurch gekennzeichnet, dass** die Detektionsvorrichtung ein optischer Positionssensor ist, der die Koordinaten des Baryzentrums der empfangenen Lichtleistung in einer oder zwei Dimensionen misst.

6. Vorrichtung zum optischen Messen eines Drehmoments nach einem der Ansprüche 2 bis 5, **dadurch gekennzeichnet, dass** die gedruckte Schaltung (4) flexibel ist und der Positionsdetektor (7) von einem flexiblen Chip gebildet wird.

7. Vorrichtung zum optischen Messen eines Drehmoments nach einem der vorherigen Ansprüche, **dadurch gekennzeichnet, dass** die reflektierende Vorrichtung (6) an einem L-Stück (8) befestigt ist, dessen Basis mit der Welle (1) radial fest verbunden ist und dessen parallel zur Welle verlaufender Abschnitt auf seiner Fläche gegenüber der Welle die reflektierende Vorrichtung (6) umfasst.

8. Vorrichtung zum optischen Messen eines Drehmoments nach dem vorherigen Anspruch, **dadurch gekennzeichnet, dass** die reflektierende Vorrichtung ein Spiegel (6) ist, dessen reflektierende Oberfläche in Bezug auf die Achse (2) der Welle (1) geneigt ist.

9. Vorrichtung zum optischen Messen eines Drehmoments nach dem vorherigen Anspruch, **dadurch gekennzeichnet, dass** der Spiegel (6) von einem Prisma mit dreieckigem Querschnitt gebildet wird, dessen Hypothenuse von einer reflektierenden Schicht bedeckt ist.

10. Vorrichtung zum optischen Messen eines Drehmoments nach Anspruch 7, **dadurch gekennzeichnet, dass** die reflektierende Vorrichtung von einem flachen Beugungsgitter (6) gebildet wird, das dem reflektierten Strahl je nach dem Ort des Kontaktpunkts des Einfallsstrahls einen anderen Winkel gibt, wobei der Lichtstrahl eine räumliche und zeitliche Kohärenz aufweist.

11. Vorrichtung zum optischen Messen eines Drehmoments nach einem der vorherigen Ansprüche, **dadurch gekennzeichnet, dass** die Lichtquelle (5) ein Diodenlaser oder eine Superlumineszenzdiode ist, die mit einem Zeitfilter oder einer Elektrolumineszenzdiode mit Resonanzhohlraum assoziiert ist.

Figure 1

Figure 2

Figure 3

Figure 4

Figure 5

**EP 2 213 996 B1**

**Documents brevets cités dans la description**

• JP 01116423 A